# EUROPEAN PATENT SPECIFICATION

(11) **EP 3 929 789 B1**
(45) Date of publication and mention of the grant of the patent: **25.02.2026**
(21) Application number: 21178030.9
(22) Date of filing: 07.06.2021
(51) Int. Cl.: G06F 21/72, G06F 21/74, G06F 21/57

(54) **SYSTEM AND METHOD TO SUPPORT MULTIPLE SECURITY SCHEMES IN AN AUTOMOTIVE PROCESSOR**
SYSTEM UND VERFAHREN ZUR UNTERSTÜTZUNG MEHRERER SICHERHEITSSCHEMATA IN EINEM AUTOMOBILPROZESSOR
SYSTÈME ET PROCÉDÉ POUR SUPPORTER PLUSIEURS SCHÉMAS DE SÉCURITÉ DANS UN PROCESSEUR AUTOMOBILE

(30) Priority: 26.06.2020 US 202016913513
(43) Date of publication of application: 29.12.2021
(73) Proprietor: NXP USA, Inc., Austin TX 78735 (US)
(72) Inventor: Culshaw, Carl, 5656 AG Eindhoven (NL); Romero Cortez, Osvaldo Israel, 5656 AG Eindhoven (NL); Perret, Guillaume, 5656 AG Eindhoven (NL)
(74) Representative: Miles, John Richard

(56) References cited:
- US-A1- 2018 217 942
- FERREIRA RAPHAEL SEGABINAZZI ET AL: "Low latency reconfiguration mechanism for fine-grained processor internal functional units", 2019 IEEE LATIN AMERICAN TEST SYMPOSIUM (LATS), IEEE, 11 March 2019 (2019-03-11), pages 1 - 6, XP033544563, DOI: 10.1109/LATW.2019.8704560
- N A: "Table of Contents Security Subsystems for Systems-on- Chip (SoCs)", 6 May 2020 (2020-05-06), XP055860150, Retrieved from the Internet <URL:https://www.nxp.com/docs/en/white-paper/Security-Subsystems-WP.pdf> [retrieved on 20211110]

## Description

### Background

### Field

This disclosure relates generally to embedded microprocessors, and more specifically, to enabling multiple security schemes in a single embedded microprocessor.

### Related Art

With the arrival of the Internet of things (IoT), the number of connected devices coupled to the Internet is increasing exponentially. The proliferation of these devices also increases risks of exploitation of the vulnerabilities of the devices and in order to steal private information or maliciously manipulating the device. In light of these security issues, manufacturers across different markets (e.g., consumer, industrial, and automotive) are requesting different secure schemes to protect the same type of embedded system.

There are several standards in the industry to provide security to embedded systems, such as Secure Hardware Extension (SHE) for automotive. Different manufacturers may have differing security requirements from the standards or, in some cases, a completely new implementation may be required. Hence, it is desirable for an embedded system to be flexible to deal with the different security requirements.

Typical embedded solutions implement a single security scheme to satisfy the demands of the market. In the case in which a new security scheme is desired by a manufacturer, a firmware update of the security scheme or a hardware update is necessary. In such cases, the differing embedded firmware may require different part numbers associated with the implemented security scheme.

US20180217942 discloses an electronic control unit (ECU) for vehicles, the ECU including memory to store encrypted data and unencrypted data; a main control unit operatively connected to memory to access unencrypted data; and a hardware encryption/decryption device operatively connected to memory to access encrypted/decrypted data for decryption using a hardware algorithm and for encryption using a hardware algorithm. Data in the memory is decrypted by the hardware encryption-decryption device using the hardware algorithm and stored in memory for use by the main control unit. The article "Low latency reconfiguration mechanism for fine-grained processor internal functional units", by FERREIRA RAPHAEL SEGABINAZZI ET AL, 2019 IEEE LATIN AMERICAN TEST SYMPOSIUM (LATS), IEEE, 11 March 2019, pages 1-6, discloses a mechanism to reconfigure fine grained processor internal functional units. The mechanism is able to effectively reconfigure the execution path with the desired unit within a latency of one clock cycle. Due to the low latency, this mechanism is suitable for real-time systems and can be useful for run-time configuration of HW resources targeting a reliable execution path. The article "Table of Contents Security Subsystems for Systems-on- Chip (SoCs)", 6 May 2020 (2020-05-06), URL:https://www.nxp.com/docs/en/white-paper/Security-Subsystems-WP.pdf discloses common concepts and usage paradigms of security subsystems including encryption services which can be used by an application to protect the confidentiality of application data. a typical example is the protection of data transferred over (unprotected and/or unsecured) communication channels.

The invention is defined by the accompanying independent claims, several embodiments are given by the dependent claims.

### Brief Description of the Drawings

Embodiments of the present invention may be better understood by referencing the accompanying drawings.
Figure 1 is a simplified block diagram illustrating an example of a multi-core applications processor 100 incorporating hardware usable to implement the present security system.
Figure 2 is a simplified block diagram illustrating components of an example security engine.
Figure 3 is a simplified block diagram illustrating components of an example of an alternative security engine 140 configured to implement embodiments of the present invention.
Figure 4 is a simplified flow diagram illustrating a process for enabling a selected security scheme by the security engine illustrated in Figure 3.
Figure 5 is a simplified flow diagram illustrating an example process for writing or updating a security scheme to the flash memory accessed by the security engine, in accord with embodiments of the present invention.
Figure 6 is a simplified flow diagram illustrating an example process for changing a security scheme selection of a security engine, in accord with embodiments of the present invention.

The use of the same reference symbols in different drawings indicates identical items unless otherwise noted. The figures are not necessarily drawn to scale.

### Detailed Description

A mechanism is provided for making multiple security schemes available in a single embedded system without requiring a firmware update or a hardware extension. Embodiments provide firmware support for storing parameters related to each available security scheme and a selection mechanism to select the desired security scheme for the application utilizing the embedded system. Embodiments can also provide a status register to provide to a user an identification of the security scheme that is presently enabled on the embedded system. Embodiments can further prevent a malicious user from selecting an invalid security scheme.

There has been a steady increase in demand for improving security of microcontrollers in the automotive market, as well as other markets for embedded systems. Over time, the combination of increased electronic complexity and integration with other fixed and portable components (e.g., keyless entry, audio systems, telematics, wireless communications, and the like) has provided portals into control systems that are deeply embedded in a vehicle. User-accessible systems potentially contain personal and private information, while the embedded systems are tied to the fundamental physical behavior of the vehicle. These aspects mean that if any of the vehicle control and information systems are compromised, the opportunity for theft or damage from external entities arises.

Security has advanced since the initial introduction of relatively simple features such as car alarms and keyless entry. In today's vehicles, security features include not just physical access and protection of confidential information, but also critical safety systems such as drive-by-wire braking and steering. The increasingly interconnected nature of a vehicle's control modules means there is no safety without security. Another factor that can affect system reliability is the malicious practice of modifying operating parameters stored in memory. Security features can prevent such activities altogether or can detect the presence of unauthorized modification and take action to mitigate or eliminate the effects of the modification, so the vehicle is still safe to drive, while indicating the need for correction.

Defining the architecture and implementation of secure microcontrollers means that designers have to anticipate a great range of attack mechanisms. This can involve a trade-off between cost of protecting against an attack (or loss of revenue as a result of the attack) versus the cost of mounting the attack. Flexibility in being able to modify, swap out, or extend a security scheme in a microcontroller can enhance the designer's ability to effectively counter attack mechanisms while keeping the cost of such protection lower.

Today's most robust forms of security and encryption involve security and cryptographic algorithms that are published as open standards. The Secure Hardware Extension (SHE) is one example of a robust set of functions and programmer model that allows a secure zone to coexist within any electronic control unit installed in a vehicle (or other system incorporating embedded microcontrollers). The secure zone's most significant features are storage and management of security keys, plus encapsulating authentication, encryption, and decryption algorithms that application code can access through an application program interface (API). Such features help to maximize flexibility while minimizing costs. Other similar security projects include, for example, EVITA, which specifies an elaborate set of functions and parameters for managing security keys as well as encryption and decryption operations, PRESERVE which is a scalable subsystem for Vehicle-to-Vehicle and Vehicle-to-Infrastructure applications, and the Federal Information Processing Standards (FIPS 140) for hardware and software components. In addition, original equipment manufacturers (OEMs) are selecting from their own sets of security ciphers and schemes that can divert from the various standards.

Typical microcontrollers are configured to use just one of these standards or schemes (or a modification thereof) and, in order to make a change, the firmware configuring the microcontroller must be changed. In such cases, manufacturers selling the microcontroller may have differing part numbers each associated with a different security scheme. This can create logistical difficulties in the sales channels. Certain embodiments of the present invention seek to avoid this issue by providing a mechanism by which the keys and parameters associated with multiple security schemes are present in the microcontroller at the time of manufacture and made selectable by the customer or OEM incorporating the microcontroller in their product.

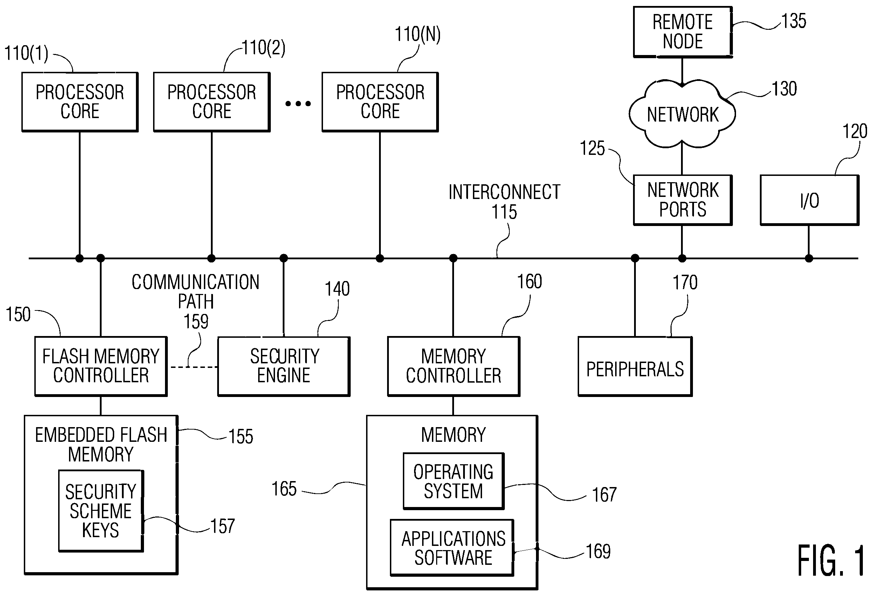

Figure 1 is a simplified block diagram illustrating an example of a multi-core applications processor 100 incorporating hardware usable to implement the present security system. A system interconnect 115 communicatively couples all illustrated components of the multi-core applications processor. A set of processor cores 110(1)-(N) are coupled to system interconnect 115. Each processor core includes at least one CPU and an optional local cache memory. Further coupled to the system interconnect are input/output devices 120, including necessary input/output devices for an application executed by the applications processor, such as input switches, actuation sensors, and other associated controllers. The applications processor also includes a network port 125 operable to connect to a network 130, which is likewise accessible to one or more remote nodes 135. The remote nodes can include other applications processors or sensors that can exchange information with applications processor 100.

A security engine 140 is also communicatively coupled to processor cores 110. Security engine 140 includes circuitry dedicated to security scheme execution, as will be discussed more fully herein. Security engine 140 communicates with flash memory controller 150 to read parameters associated with a configured security scheme executed by the applications processor. The parameters can include security scheme keys 157 that are stored in embedded flash memory 155. It should be noted that while flash memory is illustrated by way of example in the figures, other types of non-volatile memory can be used to store the parameters associated with the security scheme both here and in embodiments of the present invention. Embodiments are not limited to a type of non-volatile memory. Security engine 140 can be configured to communicate with flash memory controller 150 either via interconnect 115 or via a direct communication path 159. Through the system interconnect, any of the processor cores can provide instructions or receive information from the security engine.

In addition to the security engine and the flash memory controller, other peripherals or peripheral controllers 170 are communicatively coupled to system interconnect 115. Peripherals 170 can include, for example, circuitry to perform power management, flash management, interconnect management, USB, and other PHY type tasks.

Applications processor 100 further includes a system memory 165, which is interconnected to the foregoing by system interconnect 115 via a memory controller 160. System memory 170 further comprises an operating system 167 and in various embodiments also comprises applications software 169.

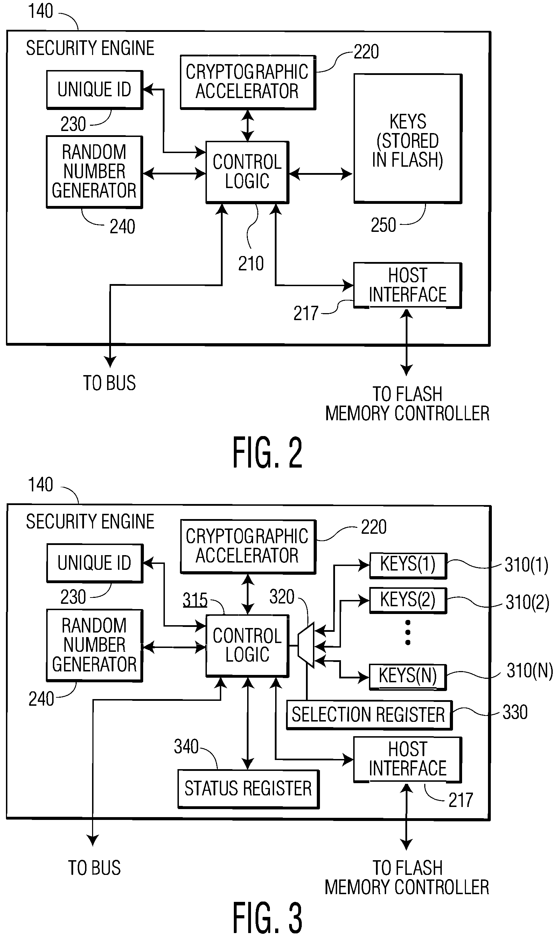

Figure 2 is a simplified block diagram illustrating components of an example security engine 140. This example security engine is appropriate for executing a security scheme such as the secure hardware extension (SHE) or modifications thereof. Cryptographic keys are moved from the software domain to the hardware domain, thereby protecting the keys from software attacks.

Control logic 210 is configured to couple the functional blocks of the security engine to the processor cores (e.g., 110) of the applications processor. As illustrated, the security engine communicates with portions of the applications processor external to the security engine via either the bus or a dedicated host interface 217 to the flash memory controller. The interconnection should be implemented in a way that no other peripheral or external entity can modify the data transferred between a processor core and the security engine.

A cryptographic accelerator module 220 processes all cryptographic operations of security engine 140. In some embodiments, cryptographic accelerator 220 is an advanced encryption standard (AES) module. Cryptographic accelerator module 220 is configured to have a low latency (e.g., less than 2 µs of a single block) and high performance to enable secure boot of the microcontroller (e.g., in less than 10ms). Encryption and decryption of data can also be performed by cryptographic accelerator module 220 using, for example, electronic cipher book mode (ECB) for processing single blocks of data and cipher block chaining mode (CBC) for processing larger amounts of data. Other functions performed by the security engine in cooperation with the cryptographic accelerator module can include, for example, compression, MAC generation, and key generation.

Security engine 140 can also include a unique identification register 230 storing, for example, a serial number. In the SHE standard, such a unique identifier includes at most 120 bits. Unique identification register 230 is stored during fabrication of the applications processor by the manufacturer. The unique identifier can be exported from the security engine to the bus or via host interface 217 to be used with other components in the applications processor.

Security engine 140 also includes a random number generator 240 (e.g., a pseudo random number generator). Seeds for the random number generator can be generated, for example, by implementing another pseudo random number generator or by compressing the output of a true random number generator. These random numbers can be provided to other portions of the applications processor upon request.

Cryptographic keys 250 are stored in a non-volatile memory, such as embedded flash memory 155. This memory is only accessible to control logic 210, either directly through host interface 217 or securely through the bus. Neither the processors nor any other peripherals have access to the memory storing the keys. The memory in which keys 250 are stored can be readable and writeable by the security engine while the processors can operate on other memory blocks of the applications processor.

In the secure hardware extension (SHE) standard, the keys are associated with corresponding policies and are stored in identified slots of the non-volatile memory. Keys include, for example, SECRET_KEY which is a unique secret key inserted during chip manufacture and used for importing/exporting keys, MASTER_ECU_KEY for updating other memory slots in SHE keys, BOOT_MAC_KEY used by the secure booting mechanism to verify authenticity of software and to verify a message authentication code (MAC), BOOT_MAC used to store the MAC of the bootloader of the secure booting mechanism, RAM_KEY used for arbitrary operations, and KEY_<n> (n=3, ... ,10) used for arbitrary functions.

In SHE and other security schemes, there may be alternative keys and different numbers of keys than those defined by the SHE standard. In order to implement these other security schemes in a typical security engine, different firmware is provided by the manufacturer to the security engine in order to configure the security engine and memory area used for storing the keys. The different firmware can result in the applications processor being offered as a different part number to customers in order clarify the type of security scheme being implemented on the product. Such differentiation carries a greater internal overhead as well as a likelihood of confusion on the part of a sales team as well as customers.

Figure 3 is a simplified block diagram illustrating components of an alternative example of a security engine 140 that is configured to implement embodiments of the present invention. This example security engine is appropriate for executing multiple security schemes, including SHE and modifications thereof or other security schemes utilizing hardware incorporated in the security engine.

As discussed above with regard to Figure 2, security engine 140 includes control logic 315, cryptographic accelerator module 220, unique identifier register 230, and random number generator 240, along with host interface 217.

Cryptographic keys 310(1)... (N) are stored in a set of non-volatile memories, such as embedded flash memory 155. This memory is only accessible to control logic 315, either directly through host interface 217 or securely through the bus. The memory in which keys 310 are stored are readable and writeable by the security engine. Each set of keys (1)...(N) corresponds to a different security scheme to be implemented by security engine 140. For example, one set of keys can correspond to the SHE standard, as described above. A second set of keys (e.g., keys(2) 310(2)) can correspond to a modification of the SHE standard that includes more keys than the SHE standard permits, but which is desired by an OEM or other customer for the applications processor. Likewise, yet another set of keys can be provided in a third set of keys, which includes fewer keys than the SHE standard permits or alternatively includes keys conforming to a different (non-SHE derivative) security environment that can be implemented by security engine 140.

Control logic 315 is configured to select the set of keys through use of, for example, a multiplexer 320 that is controlled by a selection register 330. Selection register 330 can be written to by the manufacturer of the applications processor or by an OEM incorporating the applications processor in a system. As will be discussed in greater detail below, upon reset of the security engine, the selection register is read by the control logic and the appropriate set of keys is used for configuring the security engine. Once the security engine is configured, control logic 315 can write an identifier of the security scheme being used to status register 340. Subsequently, a processor core can read status register 340 to determine which security scheme is being utilized during operation.

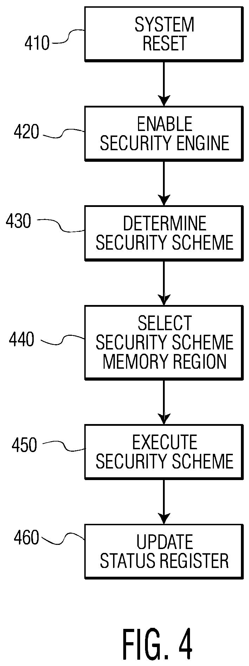

Figure 4 is a simplified flow diagram illustrating a process for enabling a selected security scheme by the security engine illustrated in Figure 3. Upon system reset (410), the security engine is enabled as part of the process of rebooting the applications processor (420). The security engine determines the selected security scheme by, for example, reading a selection register (e.g., 330) that is pre-programmed by either the device manufacturer or an OEM utilizing the device (430). The selection register can be provided by embedded flash memory (e.g., 155), a device configuration (DCF) record, or a one-time programmable memory register. Once the security scheme has been determined, the control logic selects the memory region in which the security scheme has been stored (e.g., 310(1)... (N)) (440) and executes the security scheme setup to configure the security engine for the selected security scheme (450). Finally, a status register (e.g., 340) is updated by the control logic to indicate which security scheme is being implemented by the security engine.

In the example security engine illustrated in Figure 3, selection register 330 provides an identity of the security scheme to be implemented by the security engine upon configuration. The selection register is programmed by either the manufacturer prior to providing the applications processor to a customer or original equipment manufacturer (OEM) or can be programmed by the OEM upon incorporation into a system in which the applications processor functions. The ability to update the selection register and the flash storing the keys for the available security systems can be tied to the compute lifecycle of the applications processor. For example, the compute lifecycle can be divided into three stages: build or manufacture, transfer or OEM, and operate or field use.

During the build stage, the manufacturer performs design, sourcing, and manufacturing of the applications processor. The device is presumed to be in a trusted environment and thus the security system can be configured. Installation of a default security scheme (e.g., SHE) and security schemes requested by customers can be performed by the manufacturer. An initial selection of the default scheme can be made for the device by storing the proper identification in the selection register. During this time, the flash memory that contains the security scheme parameters is not locked to modification.

During an example transfer stage, the applications processor is provided by the manufacturer to an OEM. The OEM can then prepare the applications processor to be incorporated in the operations environment and can verify that the applications processor functions properly in that environment. In addition, the OEM can make additional modifications to the firmware installed on the applications processor, including the security schemes. An OEM-specific security scheme can be installed in the flash memory and updates to the manufacturer-installed security schemes can be made. The OEM can also make changes to the selection register to provide the identification of the security scheme to be executed by the applications processor in the device. During the transfer stage, the flash memory that contains the security scheme parameters is not locked to modification. Also during this stage, the OEM can be restricted as to what can be removed from the system. For example, the OEM may be restricted from removing the default or manufacturer-installed security schemes.

During an example operate stage, the applications processor is installed and operating in the field. Functional and security updates may be installed, or security updates may be restricted. At this stage, security scheme selection has been made by the OEM and is locked so that the security scheme cannot be changed by a customer or a malicious user.

In addition to defining these stages and how the device reacts to the stages, the security engine can be configured such that once either updates to the flash memory are locked or the selection register is locked, they cannot be unlocked. In other words, once the device has progressed along the lifecycle, the device cannot be moved backwards. A secure register can be programmed with the current lifecycle stage such that the device tracks where the device is along the lifecycle.

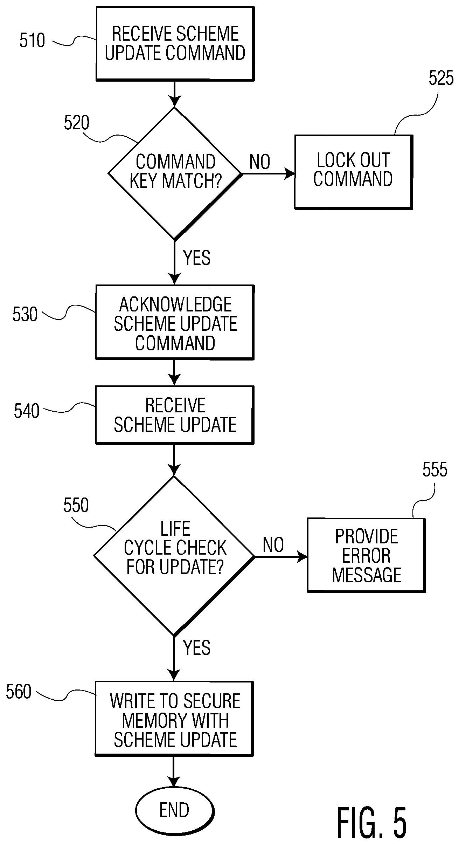

Figure 5 is a simplified flow diagram illustrating an example process for writing or updating a security scheme to the flash memory accessed by the security engine, in accord with embodiments of the present invention. A scheme update command is received by a control logic of a security engine (510). The scheme update command can be provided by a user of the applications processor or a core processor of the applications processor. A determination is made as to whether a security key included in the scheme update command matches a stored security key of the security engine (520). If there is not a match, then the security engine can lock out the scheme update command (525).

If the security key matches the stored key, then the security engine controller can acknowledge the scheme update command (530) and can then receive the scheme update data (540). Depending upon the nature of the update (e.g., new security scheme or update to an existing security scheme), the lifecycle stage can be checked to determine whether the type of update is permitted at that stage (550). If the update is not permitted, then an error message can be provided in response to the scheme update information (555). If the update is permitted, then the security scheme information is written to an appropriate location in the secure flash memory (560) and the process ends.

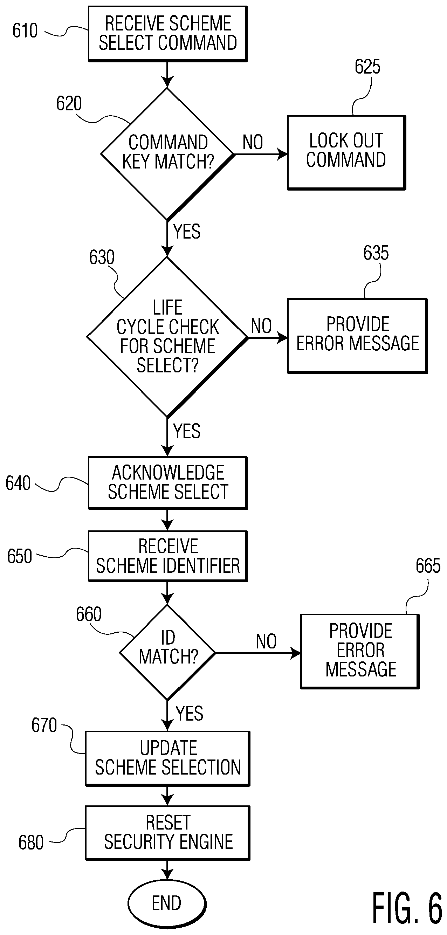

Figure 6 is a simplified flow diagram illustrating an example process for changing a security scheme selection of a security engine, in accord with embodiments of the present invention. A scheme selection command is received by the control logic of a security engine (610). The scheme selection command can be provided by a user of the applications processor or a core processor of the applications processor. A determination is made as to whether a security key included in the scheme selection command matches a stored security key of the security engine (620). If there is not a match, then the security engine can lock out the scheme update command (625).

If the security key matches the stored key, then the security engine controller can check the lifecycle stage to determine whether a change in security scheme selection is permitted at that stage (630). If the selection is not permitted, then an error message can be provided in response to the security scheme selection message (635).

If the lifecycle stage check permits security scheme selection, then the security engine controller can acknowledge the scheme selection command (640) and can then receive the scheme selection data, if that data was not provided in the scheme selection command (650). The security engine controller can then determine whether the received scheme identifier matches an identifier of any of the stored security schemes in the security engine flash memory (660). If there is no match, then an error message can be provided in response to the security scheme identifier message (665). If there is a match, then the scheme selection can be updated (e.g., updating scheme selection register 330) (670). The security engine can then be reset (680) and will restart using the newly selected security scheme.

By storing multiple secure schemes in selectable flash memory areas of an applications processor security engine, flexibility is provided to manufacturers and OEMs to program and choose a desired security scheme at various stages of the applications processor's lifecycle. A manufacturer can provide a single product that multiple OEMs can configure to their specifications through programming of a security scheme selection register. Embodiments can provide such functionality to a variety of security engines, including cryptographic security services engines (CSE and CSEc), hardware security engines (HSE), and the like. In this manner, embedded processor OEMs in security-sensitive areas (e.g., automotive and industrial loT) can be provided with desired and up-to-date security schemes in an efficient, cost-effective, and transparent manner.

By now it should be appreciated that there has been provided an applications processor configured to execute a plurality of security schemes. The applications processor includes a processor, a non-volatile memory coupled to the processor, and a security engine coupled to the non-volatile memory and the processor. The non-volatile memory stores a set of parameters associated with each of the plurality of security schemes where each set of parameters is stored in a corresponding secure memory area of the non-volatile memory. The security engine is configured to select a first security scheme of the plurality of security schemes, access a first secure memory area corresponding to the first security scheme, and configure the security engine to execute the first security scheme in response to the set of parameters stored in the first secure memory area.

In one aspect of the above embodiment, the security engine further includes a control logic and a selection register coupled to the control logic. The selection register stores an identifier of the first security scheme where the control logic performs the selecting of the first security scheme in response to the stored identifier and the control logic is configured to access each secure area of the non-volatile memory. In a further aspect, the security engine further includes a status register configured to store an identifier of a security scheme executed by the security engine where the control logic is configured to write an identifier of the first security scheme to the status register. In another further aspect, the security engine is configured to receive a security scheme update command. In response to the security scheme update command, the control logic is configured to acknowledge the security scheme update command when a security key associated with the security scheme update command matches a key stored in a non-volatile memory, receive scheme update data in response to the acknowledging of the security scheme update command, and write the scheme update data to a secure memory area of the non-volatile memory when the scheme update is permitted for a lifecycle stage of the applications processor. In still a further aspect, a lifecycle stage identifier is stored by the security engine in the non-volatile memory. In another further aspect, the security engine is configured to receive a scheme select command. In response to the scheme select command, the control logic is configured to: acknowledge the scheme select command when a security key associated with the scheme select command matches a key is stored in a non-volatile memory and a scheme selection is permitted for a lifecycle stage of the applications processor, receive scheme identifier data in response to the acknowledging the scheme select command, and write the scheme identifier data to the selection register when the scheme identifier data matches an identifier of a stored security scheme of the plurality of security schemes.

In another aspect of the above embodiment, the non-volatile memory includes flash memory, and the security engine further includes a host interface configured to directly communicate with a flash memory controller coupled to the non-volatile memory. In another aspect, the security engine is further configured to communicate with the non-volatile memory via a communications bus of the applications processor. In yet another aspect, the set of parameters include one or more cryptographic keys. In still another aspect, the applications processor further includes a network port, coupled to the processor, and configured to communicate with a remote applications processor coupled to a network. In a further aspect, the network is a controller area network comprised within an automobile.

In another embodiment, a method for selecting a security scheme from a plurality of security schemes by a security engine of an applications processor is provided. The method includes: determining, by the security engine, an identifier of a pre-selected security scheme; selecting, by the security engine, a memory region storing parameters associated with the security scheme; executing, by the security engine, the security scheme using the parameters associated with the security scheme; and, updating a status register with an identifier of the security scheme.

In one aspect of the above embodiment, prior to determining the identifier of the preselected security scheme, the method further includes receiving a message including the identifier of the security scheme and writing the identifier of the security scheme to a selection register. Said writing is performed subsequent to verifying that a security key associated with the message matches a key stored in a memory, verifying that security scheme selection is permitted for a lifecycle stage of the applications processor, and verifying that the identifier of the security scheme matches an identifier of a stored security scheme of the plurality of security schemes. In another aspect of the above embodiment, the method further includes receiving a security scheme update command and, in response to the security scheme update command, writing security scheme update data to a memory region. The writing is performed subsequent to verifying that a security key associated with the security scheme update command matches a key stored in memory, and verifying that security scheme updating is permitted for a lifecycle stage of the applications processor. In a further aspect, the method further includes receiving the security scheme update data in a security scheme data message subsequent to the verifying that the security key associated with the security scheme update command matches the key.

Another embodiment provides a security engine configured to execute a selected one of a plurality of security schemes for an applications processor. The security engine includes: a memory interface coupled to a non-volatile memory, a selection register storing an identifier of a pre-selected security scheme, and a control logic coupled to the memory interface. The non-volatile memory stores set of parameters associated with each of the plurality of security schemes and each set of parameters is stored in a corresponding secure memory area of the non-volatile memory. The control logic is configured to read the selection register, access a secure memory area corresponding to the identifier of the pre-selected security scheme, and execute the pre-selected security scheme in response to the set of parameters stored in the first secure memory area.

In one aspect of the above embodiment, the security engine further includes a status register coupled to the control logic. The status register is configured to store an identifier of the security scheme executed by the security engine where the control logic is configured to write the identifier of the security scheme to the status register. In another aspect, the security engine further includes a communications interface coupled to the control logic and configured to receive a scheme select command. The control logic is further configured to, in response to the scheme select command, acknowledge the scheme select command when a security key associated with the scheme select command matches a key stored in a non-volatile memory and a scheme selection is permitted for a lifecycle stage of the applications processor, receive scheme identifier data in response to the acknowledging the scheme select command, and write the scheme identifier data to the selection register when the scheme identifier data matches an identifier of a stored security scheme of the plurality of security schemes. In a further aspect, the security engine further includes a memory register, coupled to the control logic, storing identifier of the lifecycle stage of the applications processor where the scheme selection is permitted in at least one lifecycle stage and not permitted and at least one other lifecycle stage.

In another aspect of the above embodiment, the security engine further includes a communications interface, coupled to the control logic, and configured to receive a security scheme update command. The control logic is further configured to, in response to the security scheme update command, acknowledge the security scheme update command when a security key associated with the security scheme update command matches a key stored in the non-volatile memory, receive scheme update data in response to the acknowledging the security scheme update command, and write the scheme update data to a secure memory area of the non-volatile memory when the scheme update is permitted for a lifecycle stage of the applications processor.

A mechanism for making multiple security schemes available in a single embedded system without requiring a firmware update or a hardware extension is provided. Embodiments provide firmware support for storing parameters related to each available security scheme and a selection mechanism to select the desired security scheme for the application utilizing the embedded system. Embodiments can also provide a status register to provide to a user an identification of the security scheme that is presently enabled on the embedded system. Embodiments can further prevent a malicious user from selecting an invalid security scheme.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

The term "program," as used herein, is defined as a sequence of instructions designed for execution on a computer system. A program, or computer program, may include a subroutine, a function, a procedure, an object method, an object implementation, an executable application, an applet, a servlet, a source code, an object code, firmware, a shared library/dynamic load library and/or other sequence of instructions designed for execution on a computer system.

Some of the above embodiments, as applicable, may be implemented using a variety of different information processing systems. For example, although Figure 1 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures that may be used in accordance with the invention. Those skilled in the art will recognize that the boundaries between logic blocks are merely illustrative and that alternative embodiments may merge logic blocks or circuit elements or impose an alternate decomposition of functionality upon various logic blocks or circuit elements.

Thus, it is to be understood that the architectures depicted herein are merely exemplary, and that in fact many other architectures can be implemented which achieve the same functionality. In an abstract, but still definite sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Also for example, in one embodiment, the illustrated elements of applications processor 100 are circuitry located on a single integrated circuit or within a same device. Alternatively, applications processor 100 may include any number of separate integrated circuits or separate devices interconnected with each other. For example, memory 165 may be located on a same integrated circuit as processor cores 110 or on a separate integrated circuit or located within another peripheral or slave discretely separate from other elements of applications processor 100. Peripherals 170 and I/O circuitry 120 may also be located on separate integrated circuits or devices. Also for example, applications processor 100 or portions thereof may be soft or code representations of physical circuitry or of logical representations convertible into physical circuitry. As such, applications processor 100 may be embodied in a hardware description language of any appropriate type.

Furthermore, those skilled in the art will recognize that boundaries between the functionality of the above described operations merely illustrative. The functionality of multiple operations may be combined into a single operation or the functionality of a single operation may be distributed in additional operations. Moreover, alternative embodiments may include multiple instances of a particular operation, and the order of operations may be altered in various other embodiments.

A computer system processes information according to a program and produces resultant output information via I/O devices. A program is a list of instructions such as a particular application program and/or an operating system. A computer program is typically stored internally on computer readable storage medium or transmitted to the computer system via a computer readable transmission medium. A computer process typically includes an executing (running) program or portion of a program, current program values and state information, and the resources used by the operating system to manage the execution of the process. A parent process may spawn other, child processes to help perform the overall functionality of the parent process. Because the parent process specifically spawns the child processes to perform a portion of the overall functionality of the parent process, the functions performed by child processes (and grandchild processes, etc.) may sometimes be described as being performed by the parent process.

Although the invention is described herein with reference to specific embodiments, various modifications and changes can be made without departing from the scope of the present invention as set forth in the claims below. For example, embedded flash memory 155 can be any type of non-volatile memory to which security scheme parameters can be stored during appropriate lifecycle stages of the applications processor. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

## Claims

1. An applications processor (100) within an automobile, the applications processor configured to execute a selected one of a plurality of security schemes for an applications processor, the applications processor comprising:
a processor (110);
a non-volatile memory (155), coupled to the processor, and having stored thereon a plurality of sets of parameters (157) associated with each of the plurality of security schemes, wherein each set of parameters (157) is stored in a corresponding secure memory area of the non-volatile memory (155) and wherein the sets of parameters comprise one or more cryptographic keys (250),and
a security engine (140), coupled to the non-volatile memory (155) and the processor (110), wherein the security engine is configured to:
select a first security scheme of the plurality of security schemes,
access a first secure memory area corresponding to the first security scheme, and wherein
the security engine (140) is configured to execute the first security scheme based on the set of parameters (157) stored in the first secure memory area, and wherein the security engine (140) is further configured to receive (510) a security scheme update command; and
in response to the security scheme update command for writing security scheme update data to a memory region, a control logic (315) is configured to acknowledge (530) the security scheme update command when a security key (310) associated with the security scheme update command matches (520) a key (250) stored in the non-volatile memory (155).

2. The applications processor (100) of Claim 1 wherein the security engine (140) further comprises:
the control logic (315); and
a selection register (330), coupled to the control logic, and storing an identifier of the first security scheme, wherein
the control logic (315) performs said selecting the first security scheme based on the stored identifier of the first security scheme, and
the control logic (315) is configured to access each secure area of the non-volatile memory (155).

3. The applications processor (100) of Claim 2 wherein the security engine (140) further comprises:
a status register (340) configured to store an identifier of a security scheme executed by the security engine (140), wherein the control logic (315) is configured to write an identifier of the first security scheme to the status register (340).

4. The applications processor (100) of Claim 2 or 3, wherein
the security engine (140) is further configured to
receive (540) scheme update data in response to the acknowledging the security scheme update command, and
write (560) the scheme update data to a secure memory area of the non-volatile memory (155) when the scheme update is permitted for a lifecycle stage of the applications processor (100).

5. The applications processor (100) of Claim 4 wherein a lifecycle stage identifier is stored by the security engine (140) in the non-volatile memory (155).

6. The applications processor (100) of any of Claims 2 to 5, wherein
the security engine (140) is configured to receive a scheme select command (610); and
in response to the scheme select command, the control logic is configured to
acknowledge the scheme select command (640) when a security key associated with the scheme select command matches (620) a key stored in the non-volatile memory (155) and a scheme selection is permitted for a lifecycle stage of the applications processor (100),
receive scheme identifier data (650) in response to the acknowledging the scheme select command (610), and
write the scheme identifier data to the selection register (670) when the scheme identifier data matches (660) an identifier of a stored security scheme of the plurality of security schemes.

7. The applications processor (100) of any preceding Claim wherein
the non-volatile memory (155) comprises flash memory; and
the security engine (140) further comprises a host interface (217) configured to directly communicate with a flash memory controller (150) coupled to the non-volatile memory (155).

8. The applications processor (100) of any preceding Claim wherein the security engine (140) is further configured to communicate with the non-volatile memory (155) via a communications bus (115) of the applications processor.

9. The applications processor (100) of any preceding Claim further comprising:
a network port (125), coupled to the processor (110), and configured to communicate with a remote applications processor (135) coupled to a network (130).

10. The applications processor (100) of Claim 9 wherein the network (130) is a controller area network comprised within an automobile.

11. A method for selecting a security scheme from a plurality of security schemes, stored on a non-volatile memory, by a security engine of an applications processor within an automobile, the method comprising:
Determining (430), by the security engine, an identifier of a pre-selected security scheme;
Selecting (440), by the security engine, a memory region storing parameters associated with the security scheme of the plurality of security schemes, wherein the parameters comprise one or more cryptographic keys;
Executing (450), by the security engine, the security scheme using the parameters associated with the security scheme;
Updating (460) a status register with an identifier of the security scheme;
receiving a security scheme update command; and
in response to the security scheme update command, writing security scheme update data to a memory region, wherein said writing is performed subsequent to verifying that a security key associated with the security scheme update command matches a key stored in memory.

12. The method of Claim 11 further comprising, prior to said determining (430) the identifier of the preselected security scheme:
receiving a message comprising the identifier of the security scheme; and
writing the identifier of the security scheme to a selection register, wherein said writing is performed subsequent to
verifying that a security key associated with the message matches a key stored in a memory,
verifying that security scheme selection is permitted for a lifecycle stage of the applications processor, and
verifying that the identifier of the security scheme matches an identifier of a stored security scheme of the plurality of security schemes.

13. The method of Claim 11 or 12 further comprising:
verifying that security scheme updating is permitted for a lifecycle stage of the applications processor.

14. The method of Claim 13 further comprising:
receiving said security scheme update data in a security scheme data message subsequent to said verifying that the security key associated with the security scheme update command matches the key.

## Patentansprüche

1. Anwendungsprozessor (100) in einem Automobil, wobei der Anwendungsprozessor dazu ausgelegt ist, ein ausgewähltes aus einer Vielzahl von Sicherheitsschemata für einen Anwendungsprozessor auszuführen, wobei der Anwendungsprozessor Folgendes umfasst:
einen Prozessor (110);
einen nichtflüchtigen Speicher (155), der mit dem Prozessor gekoppelt ist und auf dem eine Vielzahl von Sätzen von Parametern (157) gespeichert ist, die mit jedem der Vielzahl von Sicherheitsschemata assoziiert sind, wobei jeder Satz von Parametern (157) in einem entsprechenden sicheren Speicherbereich des nichtflüchtigen Speichers (155) gespeichert ist und wobei die Sätze von Parametern einen oder mehrere kryptographische Schlüssel (250) umfassen, und
eine Sicherheits-Engine (140), die mit dem nichtflüchtigen Speicher (155) und dem Prozessor (110) gekoppelt ist, wobei die Sicherheits-Engine zu Folgendem ausgelegt ist:
Auswählen eines ersten Sicherheitsschemas der Vielzahl von Sicherheitsschemata,
Zugreifen auf einen ersten sicheren Speicherbereich, der dem ersten Sicherheitsschema entspricht, und wobei
die Sicherheits-Engine (140) dazu ausgelegt ist, das erste Sicherheitsschema basierend auf dem Satz von Parametern (157) auszuführen, der in dem ersten sicheren Speicherbereich gespeichert ist, und wobei die Sicherheits-Engine (140) ferner dazu ausgelegt ist, einen Sicherheitsschemaaktualisierungsbefehl zu empfangen (510); und
als Reaktion auf den Sicherheitsschemaaktualisierungsbefehl zum Schreiben von Sicherheitsschemaaktualisierungsdaten in eine Speicherregion, eine Steuerlogik (315) ausgelegt ist zum Bestätigen (530) des Sicherheitsschemaaktualisierungsbefehls, wenn ein Sicherheitsschlüssel (310), der mit dem Sicherheitsschemaaktualisierungsbefehl assoziiert ist, mit einem Schlüssel (250) übereinstimmt (520), der in dem nichtflüchtigen Speicher (155) gespeichert ist.

2. Anwendungsprozessor (100) nach Anspruch 1, wobei die Sicherheits-Engine (140) ferner Folgendes umfasst:
die Steuerlogik (315); und
ein Auswahlregister (330), das mit der Steuerlogik gekoppelt ist und eine Kennung des ersten Sicherheitsschemas speichert, wobei
die Steuerlogik (315) das Auswählen des ersten Sicherheitsschemas basierend auf der gespeicherten Kennung des ersten Sicherheitsschemas durchführt, und
die Steuerlogik (315) dazu ausgelegt ist, auf jeden sicheren Bereich des nichtflüchtigen Speichers (155) zuzugreifen.

3. Anwendungsprozessor (100) nach Anspruch 2, wobei die Sicherheits-Engine (140) ferner Folgendes umfasst:
ein Statusregister (340), das dazu ausgelegt ist, eine Kennung eines Sicherheitsschemas zu speichern, das durch die Sicherheits-Engine (140) ausgeführt wird, wobei die Steuerlogik (315) dazu ausgelegt ist, eine Kennung des ersten Sicherheitsschemas in das Statusregister (340) zu schreiben.

4. Anwendungsprozessor (100) nach Anspruch 2 oder 3, wobei
die Sicherheits-Engine (140) ferner ausgelegt ist zum Empfangen (540) von Schemaaktualisierungsdaten als Reaktion auf das Bestätigen des Sicherheitsschemaaktualisierungsbefehls, und
Schreiben (560) der Schemaaktualisierungsdaten in einen sicheren Speicherbereich des nichtflüchtigen Speichers (155), wenn die Schemaaktualisierung für eine Lebenszyklusstufe des Anwendungsprozessors (100) zulässig ist.

5. Anwendungsprozessor (100) nach Anspruch 4, wobei eine Lebenszyklusstufenkennung durch die Sicherheits-Engine (140) in dem nichtflüchtigen Speicher (155) gespeichert wird.

6. Anwendungsprozessor (100) nach einem der Ansprüche 2 bis 5, wobei
die Sicherheits-Engine (140) dazu ausgelegt ist, einen Schemaauswahlbefehl (610) zu empfangen; und
als Reaktion auf den Schemaauswahlbefehl die Steuerlogik ausgelegt ist zum
Bestätigen des Schemaauswahlbefehls (640), wenn ein Sicherheitsschlüssel, der mit dem Schemaauswahlbefehl assoziiert ist, mit einem Schlüssel übereinstimmt (620), der in dem nichtflüchtigen Speicher (155) gespeichert ist, und eine Schemaauswahl für eine Lebenszyklusstufe des Anwendungsprozessors (100) zulässig ist,
Empfangen von Schemakennungsdaten (650) als Reaktion auf das Bestätigen des Schemaauswahlbefehls (610), und
Schreiben der Schemakennungsdaten in das Auswahlregister (670), wenn die Schemakennungsdaten mit einer Kennung eines gespeicherten Sicherheitsschemas der Vielzahl von Sicherheitsschemata übereinstimmen (660).

7. Anwendungsprozessor (100) nach einem der vorhergehenden Ansprüche, wobei
der nichtflüchtige Speicher (155) einen Flash-Speicher umfasst; und
die Sicherheits-Engine (140) ferner eine Host-Schnittstelle (217) umfasst, die dazu ausgelegt ist, direkt mit einer Flash-Speichersteuerung (150) zu kommunizieren, die mit dem nichtflüchtigen Speicher (155) gekoppelt ist.

8. Anwendungsprozessor (100) nach einem der vorhergehenden Ansprüche, wobei die Sicherheits-Engine (140) ferner dazu ausgelegt ist, über einen Kommunikationsbus (115) des Anwendungsprozessors mit dem nichtflüchtigen Speicher (155) zu kommunizieren.

9. Anwendungsprozessor (100) nach einem vorhergehenden Anspruch, ferner umfassend:
einen Netzwerkport (125), der mit dem Prozessor (110) gekoppelt ist und dazu ausgelegt ist, mit einem Fernanwendungsprozessor (135) zu kommunizieren, der mit einem Netzwerk (130) gekoppelt ist.

10. Anwendungsprozessor (100) nach Anspruch 9, wobei das Netzwerk (130) ein Controller-Area-Netzwerk ist, das in einem Automobil enthalten ist.

11. Verfahren zum Auswählen eines Sicherheitsschemas aus einer Vielzahl von Sicherheitsschemata, die in einem nichtflüchtigen Speicher gespeichert sind, durch eine Sicherheits-Engine eines Anwendungsprozessors innerhalb eines Automobils, wobei das Verfahren Folgendes umfasst:
Bestimmen (430), durch die Sicherheits-Engine, einer Kennung eines vorgewählten Sicherheitsschemas;
Auswählen (440), durch die Sicherheits-Engine, einer Speicherregion, die Parameter speichert, die mit dem Sicherheitsschema der Vielzahl von Sicherheitsschemata assoziiert sind, wobei die Parameter einen oder mehrere kryptographische Schlüssel umfassen;
Ausführen (450), durch die Sicherheits-Engine, des Sicherheitsschemas unter Verwendung der Parameter, die mit dem Sicherheitsschema assoziiert sind;
Aktualisieren (460) eines Statusregisters mit einer Kennung des Sicherheitsschemas;
Empfangen eines Sicherheitsschemaaktualisierungsbefehls; und
als Reaktion auf den Sicherheitsschemaaktualisierungsbefehl, Schreiben von Sicherheitsschemaaktualisierungsdaten in eine Speicherregion, wobei das Schreiben im Anschluss an Folgendes durchgeführt wird:
Verifizieren, dass ein Sicherheitsschlüssel, der mit dem Sicherheitsschemaaktualisierungsbefehl assoziiert ist, mit einem im Speicher gespeicherten Schlüssel übereinstimmt.

12. Verfahren nach Anspruch 11, ferner umfassend, vor dem Bestimmen (430) der Kennung des vorgewählten Sicherheitsschemas:
Empfangen einer Nachricht, die die Kennung des Sicherheitsschemas umfasst; und
Schreiben der Kennung des Sicherheitsschemas in ein Auswahlregister, wobei das Schreiben im Anschluss an Folgendes durchgeführt wird:
Verifizieren, dass ein Sicherheitsschlüssel, der mit der Nachricht assoziiert ist, mit einem in einem Speicher gespeicherten Schlüssel übereinstimmt,
Verifizieren, dass die Sicherheitsschemaauswahl für eine Lebenszyklusstufe des Anwendungsprozessors zulässig ist, und
Verifizieren, dass die Kennung des Sicherheitsschemas mit einer Kennung eines gespeicherten Sicherheitsschemas der Vielzahl von Sicherheitsschemata übereinstimmt.

13. Verfahren nach Anspruch 11 oder 12, ferner umfassend:
Verifizieren, dass die Sicherheitsschemaaktualisierung für eine Lebenszyklusstufe des Anwendungsprozessors zulässig ist.

14. Verfahren nach Anspruch 13, ferner umfassend:
Empfangen der Sicherheitsschemaaktualisierungsdaten in einer Sicherheitsschemadatennachricht im Anschluss an das Verifizieren, dass der Sicherheitsschlüssel, der mit dem Sicherheitsschemaaktualisierungsbefehl assoziiert ist, mit dem Schlüssel übereinstimmt.

## Revendications

1. Processeur d'applications (100) au sein d'une automobile, le processeur d'applications étant configuré pour exécuter l'un sélectionné d'une pluralité de schémas de sécurité pour un processeur d'applications, le processeur d'applications comprenant :
un processeur (110) ;
une mémoire non volatile (155), couplée au processeur, et sur laquelle est stockée une pluralité d'ensembles de paramètres (157) associés à chacun des schémas de la pluralité de schémas de sécurité, chaque ensemble de paramètres (157) étant stocké dans une zone de mémoire sécurisée correspondante de la mémoire non volatile (155) et les ensembles de paramètres comprenant une ou plusieurs clés cryptographiques (250), et
un moteur de sécurité (140), couplé à la mémoire non volatile (155) et au processeur (110), où le moteur de sécurité est configuré pour :
sélectionner un premier schéma de sécurité de la pluralité de schémas de sécurité,
accéder à une première zone de mémoire sécurisée correspondant au premier schéma de sécurité, et
le moteur de sécurité (140) est configuré pour exécuter le premier schéma de sécurité sur la base de l'ensemble de paramètres (157) stocké dans la première zone de mémoire sécurisée, et le moteur de sécurité (140) est en outre configuré pour recevoir (510) une commande de mise à jour du schéma de sécurité ; et
en réponse à la commande de mise à jour du schéma de sécurité pour l'écriture de données de mise à jour du schéma de sécurité dans une région de mémoire, une logique de commande (315) est configurée pour
accuser réception (530) de la commande de mise à jour du schéma de sécurité lorsqu'une clé de sécurité (310) associée à la commande de mise à jour du schéma de sécurité coïncide (520) avec une clé (250) stockée dans la mémoire non volatile (155).

2. Processeur d'applications (100) selon la revendication 1, dans lequel le moteur de sécurité (140) comprend en outre :
la logique de commande (315) ; et
un registre de sélection (330), couplé à la logique de commande, et stockant un identifiant du premier schéma de sécurité, où
la logique de commande (315) exécute ladite sélection du premier schéma de sécurité sur la base de l'identifiant stocké du premier schéma de sécurité, et
la logique de commande (315) est configurée pour accéder à chaque zone sécurisée de la mémoire non volatile (155).

3. Processeur d'applications (100) selon la revendication 2, dans lequel le moteur de sécurité (140) comprend en outre :
un registre de statut (340) configuré pour stocker un identifiant d'un schéma de sécurité exécuté par le moteur de sécurité (140), la logique de commande (315) étant configurée pour écrire un identifiant du premier schéma de sécurité dans le registre de statut (340).

4. Processeur d'applications (100) selon la revendication 2 ou 3, dans lequel
le moteur de sécurité (140) est en outre configuré pour recevoir (540) des données de mise à jour du schéma en réponse à l'accusé réception de la commande de mise à jour du schéma de sécurité, et
écrire (560) les données de mise à jour du schéma dans une zone de mémoire sécurisée de la mémoire non volatile (155) lorsque la mise à jour du schéma est autorisée pour une étape du cycle de vie du processeur d'applications (100).

5. Processeur d'applications (100) selon la revendication 4, dans lequel un identifiant d'étape de cycle de vie est stocké par le moteur de sécurité (140) dans la mémoire non volatile (155).

6. Processeur d'applications (100) selon l'une quelconque des revendications 2 à 5, dans lequel
le moteur de sécurité (140) est configuré pour recevoir une commande de sélection du schéma (610) ; et
en réponse à la commande du sélection du schéma, la logique de commande est configurée pour
accuser réception de la commande de sélection du schéma (640) lorsqu'une clé de sécurité associée à la commande de sélection du schéma coïncide (620) avec une clé stockée dans la mémoire non volatile (155) et qu'une sélection du schéma est autorisée pour une étape de cycle de vie du processeur d'applications (100),
recevoir des données d'identifiant de schéma (650) en réponse à l'accusé réception de la commande de sélection du schéma (610), et
écrire les données d'identifiant de schéma dans le registre de sélection (670) lorsque les données d'identifiant de schéma coïncident (660) avec un identifiant d'un schéma de sécurité stocké de la pluralité de schémas de sécurité.

7. Processeur d'applications (100) selon l'une quelconque des revendications précédentes, dans lequel
la mémoire non volatile (155) comprend une mémoire flash ; et
le moteur de sécurité (140) comprend en outre une interface hôte (217) configurée pour communiquer directement avec un contrôleur de mémoire flash (150) couplé à la mémoire non volatile (155).

8. Processeur d'applications (100) selon l'une quelconque des revendications précédentes, dans lequel le moteur de sécurité (140) est en outre configuré pour communiquer avec la mémoire non volatile (155) via un bus de communication (115) du processeur d'applications.

9. Processeur d'applications (100) selon l'une quelconque des revendications précédentes, comprenant en outre :
un port de réseau (125), couplé au processeur (110), et configuré pour communiquer avec un processeur d'applications distant (135) couplé à un réseau (130).

10. Processeur d'applications (100) selon la revendication 9, dans lequel le réseau (130) est un réseau de zone de contrôleur contenu dans une automobile.

11. Procédé de sélection d'un schéma de sécurité parmi une pluralité de schémas de sécurité, stockée sur une mémoire non volatile, par un moteur de sécurité d'un processeur d'applications au sein d'une automobile, le procédé comprenant :
la détermination (430), par le moteur de sécurité, d'un identifiant d'un schéma de sécurité pré-sélectionné ;
la sélection (440), par le moteur de sécurité, d'une région de mémoire stockant des paramètres associés au schéma de sécurité de la pluralité de schémas de sécurité, les paramètres comprenant une ou plusieurs clés cryptographiques ;
l'exécution (450), par le moteur de sécurité, du schéma de sécurité en utilisant les paramètres associés au schéma de sécurité ;
la mise à jour (460) d'un registre de statut avec un identifiant du schéma de sécurité ;
la réception d'une commande de mise à jour du schéma de sécurité ; et
en réponse à la commande de mise à jour du schéma de sécurité, l'écriture de données de mise à jour du schéma de sécurité dans une région de mémoire, ladite écriture étant exécutée après
vérification du fait qu'une clé de sécurité associée à la commande de mise à jour du schéma de sécurité coïncide avec une clé stockée dans une mémoire.

12. Procédé selon la revendication 11, comprenant en outre, avant ladite détermination (430) de l'identifiant du schéma de sécurité pré-sélectionné :
la réception d'un message comprenant l'identifiant du schéma de sécurité ; et
l'écriture de l'identifiant du schéma de sécurité dans un registre de sélection, ladite écriture étant effectuée après
vérification du fait qu'une clé de sécurité associée au message coïncide avec une clé stockée dans une mémoire,
vérification du fait que la sélection du schéma de sécurité est autorisée pour une étape de cycle de vie du processeur d'applications, et
vérification du fait que l'identifiant du schéma de sécurité coïncide avec un identifiant d'un schéma de sécurité stocké de la pluralité de schémas de sécurité.

13. Procédé selon les revendications 11 ou 12, comprenant en outre :
la vérification du fait que la mise à jour du schéma de sécurité est autorisée pour une étape de cycle de vie du processeur d'applications.

14. Procédé selon la revendication 13, comprenant en outre :
la réception desdites données de mise à jour du schéma de sécurité dans un message de données de schéma de sécurité après ladite vérification du fait que la clé de sécurité associée à la commande de mise à jour du schéma de sécurité coïncide avec la clé.
